# DEMANDE DE BREVET EUROPEEN

(11) **EP 3 290 392 A1**
(43) Date de publication de la demande: **07.03.2018**
(21) Numéro de dépôt: 17188469.5
(22) Date de dépôt: 30.08.2017
(51) Int. Cl.: C01B 35/00

(54) **FORMATION DE NANOPARTICULES DE CARBURE DE BORE A PARTIR D'UN ALCOXYDE DE BORE ET D'UN ALCOOL POLYVINYLIQUE**

(30) Priorité: 02.09.2016 FR 1658172
(71) Demandeur: Commissariat à l'Energie Atomique et aux Energies Alternatives, 75015 Paris (FR)
(72) Inventeur: PONCELET, Olivier, 38000 GRENOBLE (FR); FUGIER, Pascal, 38190 BERNIN (FR); SKRZYPSKI, Jonathan, 89250 GURGY (FR)
(74) Mandataire: Nony

(57) **Abrégé**

La présente invention concerne un procédé de préparation de nanoparticules de carbure de bore, caractérisé en ce qu'il comprend au moins les étapes consistant à :
(i) faire interagir l'acide borique, l'oxyde de bore B₂O₃ ou un ester de l'acide borique de type B(OR)₃ avec R, identiques ou différents, représentant des groupes C₁₋₄-alkyle, avec 1 à 2 équivalents molaires d'au moins un polyol en C₂ à C₄, dans des conditions propices à la formation d'une poudre d'alcoxyde de bore ;
(ii) faire interagir, en milieu aqueux, la poudre d'alcoxyde de bore obtenue à l'issue de l'étape (i) avec une quantité efficace d'un ou plusieurs alcools polyvinyliques totalement hydrolysés, de masse molaire comprise entre 10 000 et 80 000 g.mol⁻¹, dans des conditions propices à la formation d'un gel réticulé de PVA, et
(iii) réaliser une pyrolyse oxydante du gel réticulé formé à l'issue de l'étape (ii) précédente, dans des conditions propices à la formation des nanoparticules de CB₄.

## Description

La présente invention se rapporte à un nouveau procédé de synthèse de carbure de bore. Elle est tout particulièrement intéressante au regard de l'usage du carbure de bore en tant qu'absorbeur de neutrons.

Aussi bien en radioprotection que pour réguler la marche des réacteurs, il est nécessaire de pouvoir absorber ou réduire le flux de neutrons. L'atome le plus intéressant, tant au niveau des propriétés d'absorption des neutrons qu'en termes d'abondance et de faible toxicité, est le bore. Malheureusement, le bore élémentaire est difficile à utiliser à cause de sa grande réactivité.

Il est donc privilégié, à ce jour, l'utilisation de matériaux alternatifs qui possèdent un pourcentage massique élevé en bore mais qui sont, en revanche, inertes à l'égard d'un environnement agressif. A ce titre, le nitrure de bore (BN) et surtout le carbure de bore (CB₄) s'avèrent tout particulièrement intéressants car ils contiennent respectivement 39 % et 75 % de bore.

Ainsi, le carbure de bore (CB₄) est un matériau de grand intérêt, notamment comme composant de l'électronique en milieu hostile, à la place du silicium. Enrichi avec l'isotope ¹⁰B du bore, il est également utilisé comme absorbant de neutrons dans certains types de réacteurs nucléaires.

Toutefois, pour les applications visées, il convient que le matériau employé soit doté d'une taille particulaire inférieure à 100 nm, et de préférence comprise entre 80 nm et 50 nm.

Or, le carbure de bore est précisément un matériau possédant une dureté très élevée (dureté Vickers supérieure à 30MPa). La synthèse de nanoparticules de carbure de bore par une méthode dite « descendante » (« top-down » en langue anglaise), autrement dit par réduction de taille, par exemple par broyage, pour obtenir des dimensions nanométriques, s'avère donc inadaptée. Un moyen de s'affranchir de cette difficulté est donc d'accéder, selon une approche dite « ascendante » (« bottom-up » en langue anglaise) directement à des tailles nanométriques lors du procédé de synthèse du carbure de bore.

Classiquement, le CB₄ est obtenu par pyrolyse/réduction, dans un four quartz, de B₂O₃ en présence de carbone et en atmosphère réductrice, par exemple d'argon ou d'azote. Il est généralement nécessaire d'ajouter un réducteur métallique, typiquement de la poudre de magnésium, afin d'augmenter le pouvoir réducteur du milieu de réaction.

Malheureusement, ce procédé ne s'avère pas totalement satisfaisant. De fait, il conduit à la formation de particules de CB₄ dotées d'une taille micrométrique voire millimétrique.

De plus, les particules de CB₄ ainsi obtenues possèdent un degré de pureté insuffisant car le produit obtenu est contaminé par des particules de borure de magnésium et de graphite. Ces impuretés sont difficilement isolables du carbure de bore, étant insolubles dans les solvants de lavage. Il n'est pas non plus possible d'opérer un recuit sous air ou sous dioxygène, dans la mesure où un tel recuit conduirait alors à la transformation du carbure de bore en CO₂ et oxyde de bore (B₂O₃).

De plus, la poudre de carbure de bore obtenue n'est pas totalement exempte de bore et/ou de carbone non combinés, les teneurs en ces éléments pouvant être, par exemple, respectivement de l'ordre de 3 à 7 % et de 2 à 3 %. Enfin, il est difficile de maîtriser une reproductibilité au niveau de la composition du produit obtenu, et notamment de sa staechiométrie.

A l'heure actuelle, différentes voies alternatives de synthèse du carbure de bore portent sur la mise en oeuvre de précurseurs polymériques comme sources de carbone.

En particulier, Fathi *et al.* [1] ont développé une méthode de synthèse de nanoparticules de CB₄ à partir d'un alcool polyvinylique (PVA) et d'acide borique. L'acide borique (B(OH)₃) est connu comme étant un réticulant de l'alcool polyvinylique. L'ajout d'une solution aqueuse d'acide borique sur une solution aqueuse d'alcool polyvinylique conduit ainsi à la formation d'un gel très rigide qui peut être séché. La forme sèche de ce gel est ensuite pyrolysée sous air dans un four quartz jusqu'à 800°C pour obtenir du carbure de bore sous forme de nanoparticules de taille inférieure à 100 nm. Si besoin, la cristallinité du CB₄ peut être augmentée par un recuit sous argon à 1300°C sans croissance des grains. Cette pyrolyse sous air a pour avantage d'éviter la formation d'impuretés carbonées impossibles à séparer du CB₄. Toutefois, elle a également pour conséquence de conduire majoritairement à la formation de B₂O₃, et donc à un rendement en CB₄ insuffisant, inférieur à 10 %, comme illustré dans l'exemple 1 qui suit.

Kakiage *et al.* [2] décrivent, pour leur part, la formation d'une poudre de carbure de bore à partir du produit de condensation de l'acide borique et de la glycérine. Il n'est pas précisé le rendement de synthèse obtenu. Egalement, la taille particulaire obtenue, de l'ordre de 1,1 µm, n'est pas satisfaisante pour les applications envisagées du carbure de bore, évoquées ci-dessus.

En conséquence, les procédés actuellement disponibles ne permettent pas d'accéder, avec un rendement satisfaisant, à des particules de CB₄, dotées simultanément d'une taille particulaire à l'échelle nanométrique, de préférence inférieure à 100 nm, et d'une grande pureté.

La présente invention a précisément pour objet de proposer une nouvelle voie de synthèse de particules de CB₄ permettant de donner satisfaction à l'ensemble de ces exigences.

Plus précisément, la présente invention concerne un procédé de préparation de nanoparticules de carbure de bore (CB₄), caractérisé en ce qu'il comprend au moins les étapes consistant en :
(i) faire interagir l'acide borique (B(OH)₃), l'oxyde de bore B₂O₃ ou un ester de l'acide borique de type B(OR)₃ avec R, identiques ou différents, représentant des groupes C₁₋₄-alkyle, avec 1 à 2 équivalents molaires d'au moins un polyol en C₂ à C₄, dans des conditions propices à la formation d'une poudre d'alcoxyde de bore ;
(ii) faire interagir, en milieu aqueux, la poudre d'alcoxyde de bore obtenue à l'issue de l'étape (i) avec une quantité efficace d'un ou plusieurs alcools polyvinyliques totalement hydrolysés (PVA), de masse molaire comprise entre 10 000 et 80 000 g.mol⁻¹, dans des conditions propices à la formation d'un gel réticulé de PVA, et
(iii) réaliser une pyrolyse oxydante du gel réticulé formé à l'issue de l'étape (ii) précédente, dans des conditions propices à la formation des nanoparticules de CB₄.

Le procédé selon l'invention s'avère avantageux à plusieurs titres.

Tout d'abord, il permet d'accéder à des nanoparticules de CB₄ de taille moyenne inférieure à 100 nm, de préférence comprise entre 25 et 90 nm et en particulier comprise entre 50 et 80 nm. Ainsi, il n'est pas nécessaire de broyer les particules de carbure de bore, très dures, pour les calibrer à une taille nanométrique.

Par ailleurs, comme illustré en exemple 1, le rendement de réaction en carbure de bore est amélioré de manière significative, notamment comparativement au procédé proposé par Fathi *et al.* [1]. De fait, le procédé de l'invention permet d'accéder à des rendements en carbure de bore (calculés au regard de la masse initiale de B(OH)₃ ou d'ester d'acide borique B(OR)₃ mis en oeuvre) d'au moins 40 % massique.

Parallèlement, les taux d'impuretés, en particulier de résidus carbonés, se trouvent réduits, ce qui est généralement recherché pour les applications visées pour le carbure de bore.

En outre, le procédé de l'invention permet la synthèse de carbure de bore avec une bonne reproductibilité des résultats, ce qui constitue pour la mise en oeuvre industrielle du procédé un avantage important.

Enfin, par rapport aux procédés conventionnels, le procédé selon l'invention est avantageux quant aux températures et durées de traitement. Il n'est pas nécessaire, en particulier, d'opérer un recuit pour éliminer les impuretés.

En fait, les inventeurs ont constaté, contre toute attente, que l'interaction d'une poudre d'alcoxyde de bore conforme à l'invention avec un alcool polyvinylique, selon l'étape (ii) de l'invention, permet d'accéder à un gel de PVA réticulé présentant une homogénéité significativement améliorée comparativement à celle d'un gel obtenu par ajout direct de l'acide borique à une solution aqueuse de PVA.

En effet, le mode de synthèse, par exemple décrit par Fathi *et al.* [1], opérant l'ajout de l'acide borique directement dans la solution aqueuse de PVA, provoque une gélification immédiate mais hétérogène. En particulier, des zones riches en B(OH)₃ et des zones riches en PVA faiblement réticulé sont constatées dans le gel formé. Il en va de même lors de l'utilisation d'alcoxydes de bore de faible poids moléculaire, tels que B(OMe)₃ ou B(OEt)₃, ces alcoxydes s'hydrolysant et se condensant en petits clusters riches en bore.

Avantageusement, sans vouloir être lié par la théorie, dans le cas de la méthode de synthèse selon l'invention, la formation du gel réticulé de PVA est significativement ralentie. Il en découle une distribution homogène du bore dans le matériau gélifié.

Or, les inventeurs ont découvert que l'homogénéité du gel a une incidence significative sur les qualités du matériau obtenu à l'issue de la pyrolyse oxydante. Ainsi, comme illustré dans l'exemple 1 qui suit, lors d'une pyrolyse oxydante conduite dans un four quartz avec une montée en température de 160°C par heure et sous un balayage de 50 litres d'air par heure, les gels hétérogènes tels qu'obtenus par Fathi *et al.* [1] conduisent à un faible rendement de synthèse en CB₄ (10 % massique par rapport au B(OH)₃ engagé).

En revanche, dans le cas du procédé selon l'invention, ce rendement est avantageusement significativement accru. Qui plus est, la taille des particules demeure inférieure à 100 nm.

Egalement, de manière avantageuse, la formation du carbure de bore par pyrolyse selon le procédé de l'invention ne requiert pas l'introduction d'un réducteur alcalin ou alcalino-terreux, tel que le magnésium métal. De fait, dans les voies de synthèse décrites dans la littérature, mettant en oeuvre comme sources de carbone des sucres, amidons ou celluloses, l'ajout d'un tel réducteur est nécessaire pour prévenir une dégradation de la source de carbone en CO₂ et H₂O, et obtenir du carbure de bore ([3]). Toutefois, un tel ajout a pour effet secondaire de générer un produit contaminé par des impuretés, tel que du borure de magnésium et du graphite, difficilement isolables du carbure de bore.

Les inventeurs ont constaté que, même dans le cadre d'une pyrolyse en conditions oxydantes et en l'absence d'agents réducteurs, le PVA mis en oeuvre selon le procédé de l'invention, en conservant son humidité, forme une barrière efficace à la diffusion de l'oxygène et aux radicaux oxydants au sein du milieu réactionnel. Il s'ensuit que, contre toute attente, la pyrolyse oxydante menée selon l'invention permet d'accéder au carbure de bore avec un rendement élevé. Elle permet, en outre, avantageusement, de s'affranchir de la formation annexe de contaminants tels que des particules de borure de magnésium.

D'autres caractéristiques, variantes et avantages du procédé selon l'invention ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... », sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### Etape (i) : PREPARATION D'UN ALCOXYDE DE BORE

Comme évoqué ci-dessus, une première étape du procédé de l'invention consiste à obtenir une poudre d'alcoxyde de bore.

La poudre d'alcoxyde de bore considérée selon l'invention est plus particulièrement obtenue à partir :
- de l'acide borique (noté H₃BO₄ ou B(OH)₃), de l'oxyde de bore B₂O₃ ou d'un ester de l'acide borique de type B(OR)₃ avec R, identiques ou différents, représentant des groupes C₁₋₄-alkyle, en particulier méthyle ou éthyle, tel que le borate de triméthyle ou le borate de triéthyle ; et
- d'un ou plusieurs polyols en C₂ à C₄, en particulier tels que décrits ci-dessous.

Les polyols sont mis en oeuvre à raison de 1 à 2 équivalents molaires, par rapport à l'acide borique, à l'oxyde de bore ou l'ester de l'acide borique B(OR)₃. L'alcoxyde de bore obtenu à l'issue de l'étape (i) présente ainsi encore au moins une liaison B-OH ou B-OR réactive en étape (ii) à l'égard de l'alcool polyvinylique hydrolyse.

De préférence, la poudre d'alcoxyde de bore considérée selon l'invention est obtenue à partir de l'acide borique ou de l'un de ses esters B(OR)₃, en particulier à partir de l'acide borique, du borate de triméthyle ou du borate de triéthyle.

De préférence, les polyols mis en oeuvre présentent un poids moléculaire compris entre 62 et 106 g.mol⁻¹, en particulier inférieur ou égal à 76 g.mol⁻¹.

Selon un mode de réalisation particulier, le polyol est choisi parmi les diols et les triols.

En particulier, le polyol peut être choisi parmi l'éthylène glycol (éthane-1,2-diol), le propylène glycol (propane-1,2-diol), le diéthylène glycol (2,2'-oxydiéthanol), le propane-1,3-diol, le butane-2,3-diol, le butane-1,2-diol, le butane-1,2,4-triol, le glycérol et leurs mélanges.

De préférence, il est choisi parmi l'éthylène glycol, le propylène glycol, le glycérol et leurs mélanges.

Bien entendu, l'homme du métier est à même d'ajuster les conditions expérimentales pour la formation du matériau pulvérulent d'alcoxyde de bore souhaité.

En particulier, l'étape (i) peut être réalisée *via* la mise en présence de l'acide borique ou de l'un de ses esters B(OR)₃ ou de l'oxyde de bore B₂O₃ et du ou desdits polyols, suivi du chauffage du milieu réactionnel.

Le chauffage peut être plus particulièrement opéré à une température comprise entre 50°C et 150°C, en particulier à une température d'environ 120°C.

De préférence, le chauffage est opéré sous atmosphère oxydante, en particulier sous air.

La solubilisation des réactifs est plus ou moins rapide en fonction de la nature du ou des polyols mis en oeuvre.

La durée du chauffage peut être comprise entre 30 minutes et 2,5 heures, en particulier être d'environ 2 heures.

A l'issue du chauffage, une poudre d'alcoxyde de bore est obtenue.

Comme précisé ci-dessus, cette étape préliminaire de transformation de l'acide borique (ou de l'un de ses esters de type B(OR)₃ ou de l'oxyde de bore B₂O₃) en alcoxyde de bore conformément au procédé de l'invention, conditionne la formation en étape (ii) détaillée ci-dessous, d'un gel homogène de PVA réticulé, particulièrement avantageux pour accéder par pyrolyse oxydante, aux nanoparticules de CB₄ souhaitées.

### Etape (ii) : FORMATION DU GEL RETICULE DE PVA

La seconde étape du procédé de l'invention consiste à faire interagir, en milieu aqueux, la poudre d'alcoxyde de bore obtenue en étape (i) avec une quantité efficace d'un ou plusieurs alcools polyvinyliques dans des conditions propices à la formation d'un gel réticulé de PVA.

On désignera plus simplement, dans la suite du texte, le ou les alcools polyvinyliques mis en oeuvre selon l'invention, sous l'abréviation usuelle « PVA ».

L'étape (ii) peut être plus particulièrement opérée par ajout de la poudre d'alcoxyde de bore préparée comme décrit précédemment à une solution aqueuse de PVA, suivi du chauffage du milieu réactionnel.

En particulier, dans le cadre du procédé de l'invention, le PVA n'est pas mis en présence avec de l'acide borique.

Les PVA convenant tout particulièrement à l'invention possèdent une masse molaire ajustée pour préserver au milieu réactionnel aqueux les contenant une certaine fluidité. Ainsi, il est souhaitable que la viscosité de ce milieu n'excède pas 20 à 50 Pa.s⁻¹.

La viscosité peut être par exemple mesurée à partir d'un dispositif de type coupe Ford.

Conviennent ainsi tout particulièrement les PVA de masse molaire inférieure à 80 000 g.mol⁻¹, en particulier comprise entre 10 000 et 80 000 g.mol⁻¹, notamment comprise entre 20 000 et 80 000 g.mol⁻¹ et plus particulièrement comprise entre 50 000 et 80 000 g.mol⁻¹. Par exemple, le PVA mis en oeuvre peut posséder une masse molaire de 50 000 g.mol⁻¹.

La mise en oeuvre de tels alcools polyvinyliques permet l'obtention de gels réticulés de PVA manipulables à chaud.

Par ailleurs, comme indiqué ci-dessus, les PVA mis en oeuvre selon l'invention sont totalement hydrolysés.

Typiquement, un alcool polyvinylique est obtenu par hydrolyse alcaline du polyacétate de vinyle. On considère, au sens de l'invention, que l'alcool polyvinylique issu du polyacétate de vinyle est totalement hydrolysé lorsque le taux d'hydrolyse est supérieur ou égal à 98 %.

De ce fait, l'alcool polyvinylique mis en oeuvre selon l'invention ne constitue pas une source d'acide acétique, susceptible de conduire, lors de la pyrolyse oxydante opérée en étape (iii), à la formation de l'oxyde de bore (B₂O₃) au détriment du carbure de bore souhaité.

L'homme du métier est à même d'ajuster les conditions expérimentales de réaction de l'alcoxyde de bore et du PVA, en termes par exemple de quantités des réactifs, température du milieu réactionnel et durée de la réaction, pour obtenir un gel réticulé de PVA.

Par « quantité efficace » de PVA, on entend, au sens de l'invention, une quantité suffisante en PVA pour obtenir le gel réticulé souhaité, apte à conduire sous pyrolyse, aux nanoparticules de CB₄.

Il est plus particulièrement avantageux de mettre en oeuvre, selon l'étape (ii) du procédé de l'invention, l'alcoxyde de bore et le PVA en un rapport massique PVA/alcoxyde de bore compris entre 0,5 et 1,5, en particulier entre 0,75 et 1,2. De préférence, la quantité massique de PVA est équivalente à la quantité massique d'alcoxyde de bore.

Un tel rapport massique PVA/alcoxyde de bore permet de favoriser la formation du carbure de bore souhaité tout en limitant la formation d'oxyde de bore (B₂O₃) et en évitant de générer du graphite difficile à éliminer.

Typiquement, l'étape (ii) peut être opérée par chauffage du milieu réactionnel à une température comprise entre 5 et 100°C, de préférence entre 60 et 90°C et notamment d'environ 80°C.

Le chauffage peut être maintenu pendant une durée comprise entre 1 heure et 5 heures, en particulier entre 1h30 et 2h30 et plus particulièrement pendant deux heures. Un tel chauffage permet d'obtenir une bonne homogénéité du milieu.

De préférence, le milieu réactionnel peut être maintenu sous agitation, préalablement au chauffage et/ou au cours de la gélification, par exemple à l'aide d'un système de brassage, pour assurer une bonne homogénéité du milieu réactionnel, en particulier une dispersion homogène du bore dans le milieu réactionnel.

Comme illustré dans l'exemple 1 qui suit, le gel de PVA réticulé formé à l'issue de l'étape (ii) selon l'invention résulte d'une gélification lente et homogène.

Le gel de PVA réticulé selon l'invention présente avantageusement une bonne homogénéité en termes de distribution du bore au sein du gel formé.

Un gel, clair et transparent sur l'ensemble du spectre visible, est la preuve d'une bonne homogénéité du milieu obtenu. En particulier, il n'y a pas, au sein du gel obtenu à l'issue de l'étape (ii), de micro-domaines riches en alcoxyde de bore et d'autres riches en PVA.

Le gel de PVA réticulé peut être, préalablement à la pyrolyse oxydante (iii), séché et réduit en poudre.

### Etape (iii): PYROLYSE OXYDANTE

Selon l'étape (iii) du procédé de l'invention, le gel homogène de PVA réticulé est soumis à un traitement par pyrolyse oxydante.

Par « pyrolyse oxydante », on entend signifier, au sens de l'invention, que la pyrolyse est menée sous atmosphère oxydante, par exemple sous air, dans le but de favoriser l'élimination du carbone et d'éviter la formation d'impuretés carbonées.

Ainsi, la pyrolyse en étape (iii) peut être avantageusement opérée sous un balayage d'air, par exemple de 50 L d'air par heure.

La pyrolyse peut être conduite dans un four traditionnel, par exemple un four quartz.

La température de pyrolyse peut être comprise entre 500°C et 1200°C, en particulier entre 600°C et 1000°C, et plus particulièrement de 800°C.

De préférence, la température est atteinte avec une montée en température de 50°C à 200 °C par heure, en particulier de 160°C par heure.

Avec une telle montée en température pour le traitement de pyrolyse oxydante, on aurait pu craindre une perte de bore par entraînement avec les polyols piégés. De manière surprenante, les inventeurs ont constaté que, contre toute attente, le bore est bien piégé dans sa gangue de PVA, le traitement de pyrolyse permettant d'aboutir à la formation des nanoparticules de CB₄ souhaitées.

Le produit peut être maintenu à la température de pyrolyse pendant une durée d'au moins 2 heures.

Il appartient à l'homme du métier d'ajuster les conditions de la pyrolyse, en particulier de la durée de pyrolyse, au regard du four mis en oeuvre, notamment par rapport à la géométrie du four utilisé.

Comme évoqué précédemment, la formation du carbure de bore par pyrolyse selon le procédé de l'invention ne requiert pas l'introduction d'un agent réducteur alcalin ou alcalino-terreux, tel que le magnésium métal.

De manière avantageuse, la pyrolyse menée selon l'invention permet ainsi de s'affranchir de la formation annexe de certains contaminants, par exemple de particules de borure de magnésium.

### Particules de carbure de bore obtenues selon l'invention

De manière avantageuse, comme illustré dans l'exemple 1 qui suit, la pyrolyse oxydante opérée selon l'invention conduit à la formation de carbure de bore avec un rendement significativement amélioré, comparativement à la pyrolyse menée selon Fathi *et al.* [1].

Le rendement de synthèse en carbure de bore peut être par exemple évalué par rapport à la masse initiale de B(OH)₃, de B₂O₃ ou de l'ester d'acide borique B(OR)₃ engagé.

En particulier, le rendement de réaction en carbure de bore selon l'invention est avantageusement supérieur à 20 % massique, en particulier supérieur ou égal à 30 % massique, et avantageusement supérieur ou égal à 35 % massique.

Les sous-produits annexes, oxyde de bore (B₂O₃), CO₂ et H₂O, peuvent être aisément éliminés du milieu réactionnel obtenu à l'issue de la pyrolyse oxydante. Par exemple, un simple lavage à l'eau permet d'éliminer les traces d'oxyde de bore.

L'oxyde de bore peut alors être recyclé en étape (i) du procédé de l'invention, ou encore converti en acide borique, ce dernier étant recyclé en étape (i) du procédé de l'invention.

Par ailleurs, de manière avantageuse, le carbure de bore obtenu à l'issue du procédé de l'invention est de pureté élevée. En particulier, il contient peu, voire est totalement dépourvu, de résidus carbonés.

La présence ou non de graphite peut être par exemple vérifiée par analyse par diffraction des rayons X. La formation de CB₄ et de produits annexes, tels que l'oxyde de bore, peut être vérifiée par analyse FTIR (spectroscopie infrarouge à transformée de Fourier).

La taille moyenne des particules de carbure de bore obtenues selon l'invention est inférieure ou égale à 100 nm, notamment strictement inférieure à 100 nm, en particulier inférieure ou égale à 90 nm, notamment comprise entre 25 et 80 nm et plus particulièrement comprise entre 50 et 80 nm. La taille peut être évaluée par observation des poudres par microscopie électronique à balayage (MEB).

Par ailleurs, les nanoparticules obtenues présentent une faible dispersion en taille. En particulier, 95 % des particules présentent une taille inférieure ou égale à 100 nm, et de préférence 80 % des particules présentent une taille comprise entre 80 nm et 50 nm. La dispersion en taille peut être évaluée par analyse des nanoparticules par MEB.

Les nanoparticules de carbure de bore obtenues à l'issue du procédé de l'invention présentent une forme globalement sphérique.

Selon un mode de réalisation particulier, le procédé de l'invention peut comprendre une étape ultérieure de recuit thermique des nanoparticules de carbure de bore. Cette étape de recuit permet d'accroître la cristallinité du carbure de bore, sans influer sur la taille des nanoparticules.

Ce recuit peut être opéré une température comprise entre 800°C et 1600°C, notamment d'environ 1300°C, en particulier sous atmosphère inerte. Il peut être opéré pendant une durée allant de 2 heures à 5 heures, en particulier pendant environ 3 heures.

### EXEMPLES

### Synthèse de nanoparticules de carbure de bore

### Protocole de synthèse

5 g de B(OH)₃ (0,083 mol) sont mélangés à 7,75 g d'éthylène glycol. Le mélange obtenu est chauffé pendant 2 heures à 120°C sous air, puis cristallise dès retour à température ambiante.

La poudre obtenue, transparente légèrement jaune, est broyée. 4 g de cette poudre sont ajoutés à 100 g d'une solution aqueuse de PVA hydrolysée à 4 % (Mowiol 4-98 MW 27000, Mowiol 6-98 MW 47000 ou PVA Aldrich MW 77000-79000, 98 % hydrolysés).

Le milieu réactionnel est chauffé à 80°C pendant 2 heures. On observe une dissolution totale de l'alcoxyde de bore puis un accroissement de la viscosité avec formation d'un gel homogène solide, transparent ou légèrement blanc.

Le gel est mis à sécher puis broyé. Il est ensuite pyrolysé à 800°C dans une nacelle de porcelaine dans un four tubulaire de quartz sous air (50 litres d'air par heure ; montée de 160°C par heure).

La poudre grise obtenue à l'issue de la pyrolyse oxydante est lavée à l'eau pour éliminer les traces de B₂O₃, puis séchée à 300°C dans une étuve.

Des synthèses similaires ont été effectuées en mettant en oeuvre, à la place de l'éthylène glycol, du propylène glycol ou du glycérol ; et/ou, à la place de l'acide borique, du borate de triméthyle (B(OMe)₃) ou borate de triéthyle (B(OEt)₃).

### Résultats

### Caractérisation des poudre de carbure de bore

L'analyse par spectroscopie d'absorption infrarouge des poudres obtenues dans les conditions précitées confirment la formation de carbure de bore, avec un pic, attribuable à la liaison C-B, à 1170 cm⁻¹.

Les poudres de carbure de bore sont également observables par microscopie électronique à balayage (MEB). Les clichés obtenus par MEB témoignent d'une population de cristaux sphériques homogènes, de taille inférieure à 90 nm.

### Rendement de synthèse

Le rendement en carbure de bore obtenu est mesuré par rapport à la masse initiale de B(OH)₃ (ou d'ester d'acide borique) introduite au début de la synthèse.

Dans les conditions décrites ci-dessus, en utilisant l'acide borique et comme polyol de faible poids moléculaire, l'éthylène glycol, le propylène glycol ou le glycérol, on obtient à l'issue de la pyrolyse oxydante un rendement en carbure de bore d'environ 40 % massique.

De la même façon, la mise en oeuvre, comme produit de départ, de B(OMe)₃ et de B(OEt)₃ à la place de l'acide borique avec 1 à 2 équivalents molaires d'un polyol de faible poids moléculaire (éthylène glycol, propylène glycol ou glycérol), permet d'accéder, à l'issue de la pyrolyse oxydante, à un rendement de synthèse en carbure de bore de 35 à 40 % massique.

En revanche, la synthèse de carbure de bore, en mettant en oeuvre le protocole de Fathi *et al.* [1], avec un PVA hydrolysé de type Mowiol 4-98, conduit, après lavage à l'eau de la poudre grise pyrolysée, à un rendement en carbure de bore de 9 à 10 % massique par rapport à l'acide borique engagé.

Une synthèse similaire, selon le protocole de Fathi *et al* [1], avec un grade de PVA commmercialisé par Aldrich, hydrolysé à 98 % et de poids moléculaire de 3000 g.mol⁻¹, conduit encore à un rendement de synthèse de carbure de bore d'environ 10 % massique.

### Références

[1] Fathi et al., Synthesis of boron carbide nano particles using polyvinyl alcohol and boric acid, Ceramics - Silikaty 56(1), 32-35 (2012);
[2] Kakiage et al., Low-temperature synthesis of boron carbide powder from condensed boric acid-glycerin product, Materials Letters 65 (2011) 1839-1841.
[3] Murray, Low temperature Synthesis of Boron Carbide Using a Polymer Precursor Powder Route, School of Metallurgy and Materials, University of Birmingham, Sept 2010 - Sept 2011.

## Revendications

1. Procédé de préparation de nanoparticules de carbure de bore, **caractérisé en ce qu'**il comprend au moins les étapes consistant à :
(i) faire interagir l'acide borique, l'oxyde de bore B₂O₃ ou un ester de l'acide borique de type B(OR)₃ avec R, identiques ou différents, représentant des groupes C₁₋₄-alkyle, avec 1 à 2 équivalents molaires d'au moins un polyol en C₂ à C₄, dans des conditions propices à la formation d'une poudre d'alcoxyde de bore ;
(ii) faire interagir, en milieu aqueux, la poudre d'alcoxyde de bore obtenue à l'issue de l'étape (i) avec une quantité efficace d'un ou plusieurs alcools polyvinyliques totalement hydrolysés, de masse molaire comprise entre 10 000 et 80 000 g.mol⁻¹, dans des conditions propices à la formation d'un gel réticulé de PVA, et
(iii) réaliser une pyrolyse oxydante du gel réticulé formé à l'issue de l'étape (ii) précédente, dans des conditions propices à la formation des nanoparticules de CB₄.

2. Procédé selon la revendication précédente, caractérisé ce que les nanoparticules de CB₄ possèdent une taille moyenne inférieure ou égale à 100 nm, notamment inférieure ou égale à 90 nm, en particulier comprise entre 25 et 80 nm et plus particulièrement comprise entre 50 et 80 nm.

3. Procédé selon l'une quelconque des revendications précédentes, dans lequel l'étape (i) est opérée à partir de l'acide borique, du borate de triméthyle ou du borate de triéthyle.

4. Procédé selon l'une quelconque des revendications précédentes, dans lequel le polyol en étape (i) est choisi parmi l'éthylène glycol, le propylène glycol, le diéthylène glycol, le propane-1,3-diol, le butane-2,3-diol, le butane-1,2-diol, le butane-1,2,4-triol, le glycérol et leurs mélanges, en particulier parmi l'éthylène glycol, le propylène glycol, le glycérol et leurs mélanges.

5. Procédé selon l'une quelconque des revendications précédentes, dans lequel l'étape (i) est réalisée *via* la mise en présence de l'acide borique ou de l'un de ses esters B(OR)₃ ou de l'oxyde de bore B₂O₃, et du ou desdits polyols, suivi du chauffage du milieu réactionnel.

6. Procédé selon la revendication précédente, dans lequel le chauffage est opéré à une température comprise entre 50°C et 150°C, en particulier de 120°C, de préférence sous atmosphère oxydante, en particulier sous air.

7. Procédé selon l'une quelconque des revendications précédentes, dans lequel l'étape (ii) est opérée par ajout de la poudre d'alcoxyde de bore à une solution aqueuse d'alcool(s) polyvinylique(s), suivi du chauffage du milieu réactionnel.

8. Procédé selon la revendication précédente, dans lequel le chauffage est opéré à une température comprise entre 5°C et 100°C, en particulier entre 60°C et 90°C et notamment de 80°C, la durée du chauffage étant plus particulièrement comprise entre 1 heure et 5 heures, en particulier entre 1h30 et 2h30 et plus particulièrement pendant 2 heures.

9. Procédé selon l'une quelconque des revendications précédentes, dans lequel la pyrolyse en étape (iii) est opérée par chauffage à une température comprise entre 500°C et 1200°C, en particulier entre 600°C et 1000°C, notamment de 800°C.

10. Procédé selon l'une quelconque des revendications précédentes, dans lequel la pyrolyse en étape (iii) est opérée sous balayage d'air.
